# EUROPÄISCHE PATENTSCHRIFT

(11) **EP 2 894 101 B1**
(45) Veröffentlichungstag und Bekanntmachung des Hinweises auf die Patenterteilung: **31.10.2018**
(21) Anmeldenummer: 15150067.5
(22) Anmeldetag: 05.01.2015
(51) Int. Cl.: B65B 35/24, B65B 35/44, B65B 43/56, B65B 43/62, B65B 5/10, B65B 5/12, B65G 54/00, B26D 7/32, B65B 25/06, B65B 43/52, B65B 5/08, B65B 61/28

(54) **Verfahren und Vorrichtung zum Anordnen mehrerer Lebensmittel in wenigstens einem Unterteil einer Verpackung**
Method and device for the arrangement of a plurality of food items in at least one lower portion of a package
Procédé et dispositif d'agencement de plusieurs produits alimentaires dans au moins une sous-partie d'un emballage

(30) Priorität: 13.01.2014 DE 102014000132
(43) Veröffentlichungstag der Anmeldung: 15.07.2015
(73) Patentinhaber: Weber Maschinenbau GmbH Breidenbach, 35236 Breidenbach (DE)
(72) Erfinder: Bergmann, Marco, 26676 Barßel (DE)
(74) Vertreter: Manitz Finsterwald Patentanwälte PartmbB

(56) Entgegenhaltungen:
- EP-A1- 2 614 939
- WO-A1-2014/108287
- DE-A1- 3 711 688
- DE-A1- 10 043 304
- JP-A- S60 170 401
- US-A1- 2012 031 741
- US-B1- 6 692 196

## Beschreibung

Die Erfindung betrifft ein Verfahren und eine Vorrichtung zum Anordnen mehrerer Lebensmittel, insbesondere verschiedener Sorten geschnittener Fleisch- und Wurstwaren, in wenigstens einem Unterteil einer Verpackung, wobei die Vorrichtung wenigstens zwei Lebensmittelzuführungen aufweist. Weiter betrifft die Erfindung auch eine Verpackungsaufnahme für die Vorrichtung.

Um als Endverbraucher eine mit verschiedenen Sorten Fleisch, Wurst, Käse, Fisch und/oder anderen Lebensmitteln belegte Platte zusammen zu stellen und beispielsweise Gästen anbieten zu können, müssen zumeist verschiedene Packungen der einzelnen Lebensmittel gekauft und neu zusammengestellt werden, wobei zumeist nur ein Teil der gekauften Lebensmittel genutzt wird. Es besteht daher ein Interesse dem Endverbraucher fertig zusammengestellte Platten mit entsprechenden, d.h. fertig portionierten, beispielsweise in Scheiben geschnittenen, Lebensmitteln in einem ansprechenden Äußeren anzubieten.

Sollen jedoch mehrere Lebensmittel gemeinsam in einer Verpackung angeordnet werden, müssen diese zumeist aufwendig von Hand zusammengestellt und in die Verpackung eingelegt werden. Insbesondere wenn die oder eines der Lebensmittel in Scheiben geschnitten, fertig portioniert angeboten werden soll. Eine maschinelle Anordnung derartiger Produkte ist mit den bekannten Vorrichtungen

nicht oder zumindest nicht wirtschaftlich möglich, da diese nicht oder nur sehr schwer aufeinander abzustimmen sind.

EP 2 614 939 A1 offenbart ein Verfahren, bei dem Mehrsortenpackungen oder Mischpackungen erzeugt werden können. Teilportionen können versetzt auf einem Produktträger abgelegt werden. Die Produktträger können um eine vertikale Achse gedreht werden. Bei den Produktträgern kann es sich beispielsweise um Trays handeln. Die Produktträger können nacheinander Schneidvorrichtungen zugeführt werden, wobei die Produktträger auf einem herkömmlichen Förderband verfahren werden.

DE 37 11 688 A1 betrifft eine Verpackungsanlage für Lebensmittel. Produktträger werden mit Hilfe eines an sich bekannten Endlosfördersystems bewegt. Die Produktträger werden dabei über Magnete an das Endlosfördersystem gekoppelt und können bewegt, gestoppt oder umgelenkt werden, ohne den Antrieb des Produktfördersystems anhalten zu müssen.

Aufgabe der Erfindung ist es, eine Lösung bereit zu stellen, mit der mehrere Lebensmittel in gewünschter Weise in einer Verpackung angeordnet, d.h. in der Verpackung ausgerichtet, werden können.

Die Lösung dieser Aufgabe erfolgt mit einem Verfahren mit den Merkmalen des Patentanspruchs 1, mit einer Vorrichtung mit den Merkmalen des Patentanspruchs 6. Weiterbildungen und vorteilhafte Ausgestaltungen der Erfindung sind in den jeweils nachgeordneten Unteransprüchen angegeben.

Das Verfahren zum Anordnen mehrerer Lebensmittel, insbesondere verschiedener Sorten geschnittener Fleisch- und Wurstwaren, in wenigstens einem Unterteil einer Verpackung, zeichnet sich erfindungsgemäß dadurch aus, dass das die Lebensmittel aufnehmende Unterteil auf einem Wagen auf einer Führungsbahn verfahren wird, wobei der Wagen mittels Magnetquellen verfahren wird, dass der Wagen nacheinander Lebensmittelzuführungen der einzelnen Lebensmittel zugeführt wird, und dass an jeder Lebensmittelzuführung wenigstens ein Lebensmittel auf bzw. in dem Unterteil abgelegt wird. Dabei wird mit den erzeugten Magnetfeldern eine Fördergeschwindigkeit und eine Präzision beim Verfahren der Unterteile der Verpackungen erreicht, durch die eine gezielte Verknüpfung der einzelnen Lebensmittelzuführungen ermöglicht ist. Die einzelnen, vor dem Ablegen in dem Unterteil der Verpackung portionierten Lebensmittel werden dann auf einfache Weise in bzw. auf den zuvor jeweils bereitgestellten und in gewünschter Weise ausgerichteten Unterteilen abgelegt. An jeder der Lebensmittelzuführungen wird somit eine gewünschte Anzahl an beispielsweise fertig geschnittenen Scheiben des Lebensmittels für die jeweilige Verpackung bereitgestellt.

Bevorzugt besteht dabei wenigstens eines der Lebensmittel aus Scheiben, die einander zumindest teilweise überlappend auf bzw. in dem Unterteil abgelegt werden. Insbesondere können auch alle Lebensmittel in zumindest teilweise einander überlappenden Scheiben angeordnet sein. Alternative Anordnungen können nebeneinander angeordnete Stücke, insbesondere parallel oder bogenförmig zueinander ausgerichtete Stücke, einzelner Lebensmittel oder auch zu den Lebensmitteln passende Dips, Saucen oder dergleichen betreffen, die je nach Konsistenz dieser in entsprechend abgetrennten Ablagebereichen oder Behältnissen innerhalb der Verpackung angeordnet werden. Weiter können die verschieden geformten Lebensmittel und Anordnungen auch untereinander gemischt werden.

Um die einzelnen Lebensmittel gezielt in zueinander gewünschter Weise ausrichten zu können, ist weiter vorgesehen, dass die Unterteile der Verpackungen an bzw. vor den einzelnen Lebensmittelzuführungen gedreht werden. Einzelne Bahnen einander überlappender Scheiben der Lebensmittel können so beispielsweise winklig, insbesondere in einem Winkel von 90°, zu anderen auf bzw. in dem Unterteil angeordneten Bahnen ausgerichtet werden. Dazu werden die Unterteile der Verpackungen um eine im Wesentlichen vertikale Achse gedreht, wobei deren Boden möglichst in einer horizontalen Ebene gehalten ist, so dass ein Verrutschen bereits abgelegter Lebensmittel beim Drehen vermieden ist.

Einander überlappende Scheiben werden vorteilhafterweise parallel zu einer vorbestimmten Förderrichtung der Führungsbahn auf bzw. in dem Unterteil abgelegt, so dass diese beim Ablegen keine Richtungsänderung erfahren.

Gegebenenfalls kann es dabei erforderlich sein, dass die Unterteile an den Lebensmittelzuführungen auf der Führungsbahn angehalten werden, während diese befüllt werden. Ob die Unterteile an den Lebensmittelzuführungen angehalten oder alternativ verlangsamt werden müssen, hängt dabei von den Abständen der jeweiligen Lebensmittelzuführungen zueinander, der Form und Anordnung der Lebensmittel, der Fördergeschwindigkeit der Unterteile usw. ab.

Nachdem die Unterteile vollständig mit den jeweils vorgesehenen Lebensmitteln belegt wurden, ist nach einer Weiterbildung vorgesehen, dass die Unterteile von diese transportierenden Wagen weggedrückt und einem Verschließen der Verpackung zugeführt werden. Die Unterteile der Verpackung werden dann vor einem Verschließen dieser an eine der Führungsbahn nachgeschaltete Verschließeinrichtung überführt. Gemäß einer alternativen Weiterbildung können die Unterteile der Verpackungen aber auch auf der Führungsbahn mit einer den Lebensmittelzuführungen in Förderrichtung der Führungsbahn nachgeschalteten Verschließeinrichtung verschlossen werden und die dann fertig abgepackten Verpackungen von der Führungsbahn abgenommen werden. Anstatt die verschlossenen Verpackungen von dem Wagen wegzudrücken, könnten diese dann auch mittels Saugnäpfen, Greifern oder dergleichen ergriffen und von den Wagen abgenommen werden.

Die Vorrichtung zum Anordnen mehrerer Lebensmittel, insbesondere verschiedener Sorten geschnittener Fleisch- und Wurstwaren, in wenigstens einem Unterteil einer Verpackung mit wenigstens zwei Lebensmittelzuführungen, zeichnet sich erfindungsgemäß dadurch aus, dass die Lebensmittelzuführungen jeweils mit einem Lebensmittelübergabeende einer Führungsbahn zugeordnet sind, auf der mittels Magnetfeldquellen Wagen verfahrbar sind, dass die Lebensmittelzuführungen zumindest mit den Lebensmittelübergabeenden oberhalb der Führungsbahn angeordnet sind, und dass die Wagen Verpackungsaufnahmen mit wenigstens einem Aufnahmerahmen aufweisen. Die in den Verpackungen anzuordnenden Lebensmittel gelangen so auf einfache Weise schwerkraftbedingt in bzw. auf die mittels der Wagen unterhalb der Lebensmittelübergabeenden bereitgestellten Unterteile der Verpackungen. Durch die Magnetfeldquellen ist dabei gewährleistet, dass die zu belegenden Unterteile mit ausreichender Fördergeschwindigkeit zwischen den einzelnen Lebensmittelzuführungen verfahrbar sind, so dass immer ein Wagen mit einem Unterteil unterhalb eines Lebensmittelübergabeendes der Lebensmittelzuführungen bereitstellbar ist, wenn Lebensmittel übergeben werden.

Um zu gewährleisten, dass die Unterteile sicher in dem Aufnahmerahmen gehaltert sind, ist vorgesehen, dass der Aufnahmerahmen eine an das aufzunehmende Unterteil angepasste Form aufweist. Diese angepasste Form kann in weiterer Ausgestaltung darin bestehen, dass zumindest Ecken des Aufnahmerahmens in Abständen zueinander angeordnet sind, die Abmessungen von Ecken eines jeweils aufzunehmenden Unterteils entsprechen. In weiterer Ausgestaltung kann der Aufnahmerahmen auch als Aufnahmemulde ausgebildet sein. Das Unterteil liegt dann mit Vorteil mit seiner Außenwandung vollständig an der Aufnahmemulde an, wobei die Aufnahmemulde dann eine Form aufweist, die zumindest abschnittsweise einem Negativ der äußeren Abmessungen des aufzunehmenden Unterteils entspricht. Zudem weisen das eingesetzte Unterteil und die Aufnahmemulde dann mit Vorteil jeweils sich in einer gemeinsamen Ebene erstreckende Öffnungen auf.

Weiter kann wenigstens einer der Lebensmittelzuführungen ein Wagenhaltepunkt der Führungsbahn zugeordnet sein. Ein entsprechender Wagenhaltepunkt ist beispielsweise dann vorzusehen, wenn das mit dem Wagen verfahrbare Unterteil der Verpackung zum Belegen dieses angehalten werden muss. Insbesondere ist jeder Lebensmittelzuführung ein solcher Wagenhaltepunkt zugeordnet. Zusätzliche Wagenhaltepunkte können zudem vorgesehen sein, um Stauungen oder Zusammenstöße einzelner Wagen zu verhindern. Alternativ können die Wagen mit den Verpackungen durch eine geeignete Steuerung auch abgebremst und mit verringerter Geschwindigkeit unterhalb der Lebensmittelübergabeenden verfahren werden.

Wenigstens unterhalb der Lebensmittelübergabeenden weisen die Führungsbahn und wenigstens eine der Lebensmittelzuführungen in einer bevorzugten Ausgestaltung weitestgehend parallel zueinander, d.h. übereinander parallel, verlaufende Förderrichtungen auf, wobei die Lebensmittelzuführung oberhalb der Führungsbahn angeordnet ist. Diese Anordnung von Führungsbahn und Lebensmittelzuführung bezieht sich vor allem auf als Förderbänder oder dergleichen ausgebildete Lebensmittelzuführungen, die vorteilhafterweise alle derart zueinander angeordnet sind und dem Zuführen von formstabilen Lebensmitteln, insbesondere Scheiben von Fleisch, Wurst, Käse, Fisch usw., dienen. Insbesondere für pastöse Lebensmittel, wie beispielsweise Dips, sind auch Lebensmittelzuführungen geeignet, die als wenigstens abschnittsweise senkrecht oberhalb der Führungsbahn angeordnete Zuleitungen ausgebildet sind.

In einem Produktionsbereich ergibt sich daraus dann eine bevorzugte Aufstellung der Vorrichtung, bei der alle als Förderbänder ausgebildete Lebensmittelzuführungen und denen vorgeschaltete Verarbeitungsprozesse parallel nebeneinander angeordnet sind und die Führungsbahn aus mehreren rechtwinklig zueinander abgewinkelten Abschnitten zusammengestellt ist. Diese Abschnitte sind aufeinanderfolgend abwechselnd nach links und nach rechts geführt, so dass jeder zweite Abschnitt der Führungsbahn eine Förderrichtung gleich der Förderrichtung der jeweils zugeordneten Lebensmittelzuführung aufweist, deren Lebensmittelübergabeenden entsprechend der Länge der parallel zu den Lebensmittelzuführungen geführten Abschnitte zueinander versetzt sind.

Um die einzelnen Lebensmittel beim Anordnen in gewünschter Weise zueinander ausrichten zu können, ist weiter vorgesehen, dass der Aufnahmerahmen zu einer Unterkonstruktion der Verpackungsaufnahme drehbar ist. Damit kann der Aufnahmerahmen in einer waagerechten oder zumindest im Wesentlichen waagerechten Ebene gedreht werden, um beispielsweise winklig zueinander anzuordnende Lebensmittel in bzw. auf dem Unterteil ablegen zu können.

Die Drehbarkeit des Aufnahmerahmens kann dabei gemäß einer ersten Ausführung dadurch gewährleistet sein, dass die Verpackungsaufnahme eine Dreheinrichtung mit einem Antrieb aufweist. Dreheinrichtung und Antrieb bilden somit eine Einheit aus und sind als Baugruppe der Verpackungsaufnahme auf dem Wagen angeordnet.

Gemäß einer zweiten Ausführung ist vorgesehen, dass die Verpackungsaufnahme eine Dreheinrichtung aufweist, die von außen über wenigstens einen der Führungsbahn zugeordneten Antrieb betätigbar ist. An jeder Position der Führungsbahn, an der eine Drehung des Unterteils erforderlich ist, ist dementsprechend ein Antrieb vorzusehen. Die der Führungsbahn zugeordneten Antriebe sind dann vorteilhafterweise in Förderrichtung der Führungsbahn vor oder unmittelbar an den jeweiligen Lebensmittelzuführungen an der Führungsbahn angeordnet. In weiterer Ausgestaltung weisen die Dreheinrichtungen der Verpackungsaufnahmen dann einen außenliegenden, vorteilhafterweise umlaufenden Zahnkranz auf, in den der wenigstens eine Antrieb eingreift. Der Antrieb selbst muss dann nicht zwingend auch selbst angetrieben sein, sondern kann beispielsweise aus in den Zahnkranz eingreifenden Vorsprüngen bestehen, durch die eine Zwangsführung der Verpackungsaufnahme gewährleistet ist und die diese in einem vorbestimmten Winkel zu dem Wagen drehen. Der Antrieb, insbesondere jeder der Antriebe, besteht somit aus wenigstens einem statischen, die Vorsprünge aufweisenden Teil, das vorzugsweise an der Führungsbahn oder einem Gestell dieser montiert ist.

Weiter können die Verpackungsaufnahmen einen Auswurfmechanismus aufweisen, mit dem eine aufgenommene Verpackung aus dem Aufnahmerahmen herausdrückbar ist. Die Verpackungen können so auf einfache Weise und ohne zusätzliche Mittel oder Vorrichtungen bereitstellen zu müssen an beispielsweise ein Förderband einer Verschließvorrichtung übergeben werden. Anstatt die offenen Verpackungen an eine Verschließvorrichtung zu übergeben, können diese auch in den Aufnahmerahmen gehalten, durch beispielsweise eine aufzubringende Folie, verschlossen werden und anschließend über einen entsprechenden Auswurfmechanismus bzw. eine externe Hebeeinrichtung, Greifer oder dergleichen, weitergefördert werden. Die Folie bildet dann einen Oberteil der Verpackung aus.

Weiter wird hierin eine Verpackungsaufnahme für die vorbezeichnete Vorrichtung offenbart. Diese zeichnet sich dadurch aus, dass sie wenigstens einen Aufnahmerahmen aufweist, und dass sie Befestigungsmittel für wenigstens einen mittels erzeugter Magnetfelder auf einer Führungsbahn verfahrbaren Wagen aufweist. Die Befestigungsmittel können beispielsweise als eine oder mehrere Montageplatten ausgebildet sein, die an den oder die jeweiligen Wagen, auf dem bzw. auf denen die Verpackungsaufnahme befestigt werden soll, angepasst sind. Die Befestigungsmittel stellen dann eine Unterkonstruktion der Verpackungsaufnahme dar, auf der die restliche Verpackungsaufnahme aufgebaut ist. Als Wagen ist dabei ein ein- oder mehrteiliges Mittel zum Führen der Verpackungsaufnahme der Führungsbahn definiert.

Ein Ausführungsbeispiel der Erfindung, aus dem sich weitere, erfindungswesentliche Merkmale ergeben können, ist in der Zeichnung dargestellt. Es zeigen:
- Figur 1:: eine perspektivische Ansicht eines Teils einer erfindungsgemäßen Vorrichtung mit Führungsbahn und einer Lebensmittelzuführung;
- Figur 2:: eine Seitenansicht eines Ausschnitts der Vorrichtung gemäß Figur 1; und
- Figur 3:: eine perspektivische Ansicht einer Verpackungsaufnahme auf einem Wagen.

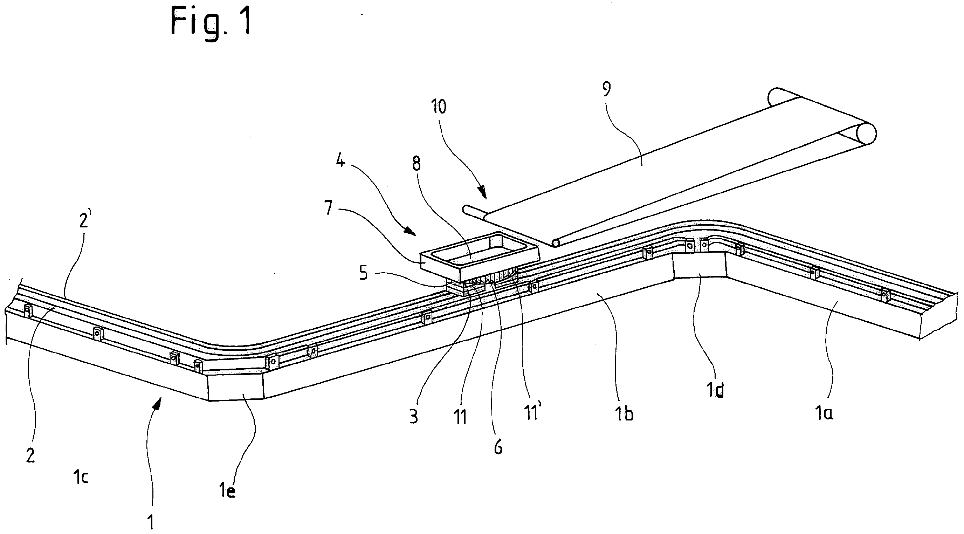

Der in Figur 1 dargestellte Teil der Vorrichtung zeigt eine Führungsbahn 1, die zwei parallel zueinander angeordnete Führungsschienen 2 aufweist. Diese begrenzen randseitig eine an der Führungsbahn 1 ausgebildete Spur und weisen an deren freien Enden zueinander gebogene Endabschnitte auf. Zwischen diesen ist in der Spur ein Wagen 3 mit einer Verpackungsaufnahme 4 verfahrbar gehaltert.

Die Verpackungsaufnahme 4 besteht aus einer Unterkonstruktion 5, einer Dreheinrichtung 6 und einem Aufnahmerahmen 7, der über die Dreheinrichtung 6 drehbar zu der Unterkonstruktion 5 und dem Wagen 3 gelagert ist. In dem Aufnahmerahmen 7 ist zudem ein Unterteil 8 einer Verpackung aufgenommen.

Die Führungsbahn 1 setzt sich weiter aus drei geraden Abschnitten 1a, 1b, 1c zusammen, wobei in Förderrichtung von 1a über 1b nach 1c benachbarte Abschnitte jeweils rechtwinklig zueinander angeordnet und über jeweils ein Kurventeil 1d, 1e miteinander verbunden sind. Die Abschnitte 1a und 1c sind dementsprechend parallel versetzt zueinander ausgerichtet. Oberhalb des Abschnitts 1b ist Figur 1 weiterhin eine als Förderband ausgebildete Lebensmittelzuführung 9 zu entnehmen, die parallel zu dem Abschnitt 1b angeordnet ist, so dass auf der Lebensmittelzuführung 9 aufliegende Lebensmittel und auf der Führungsbahn 1 verfahrbare Wagen 3 parallel zueinander in gleiche Richtung förderbar sind.

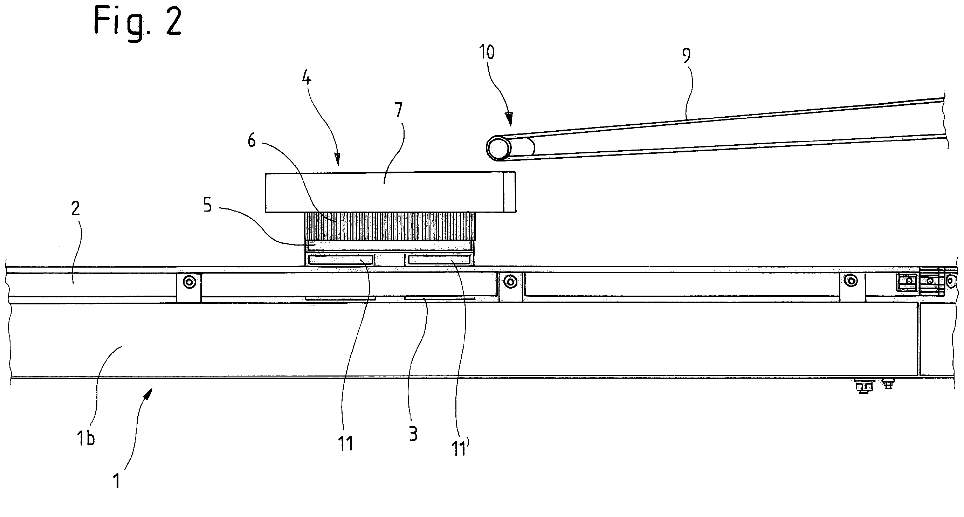

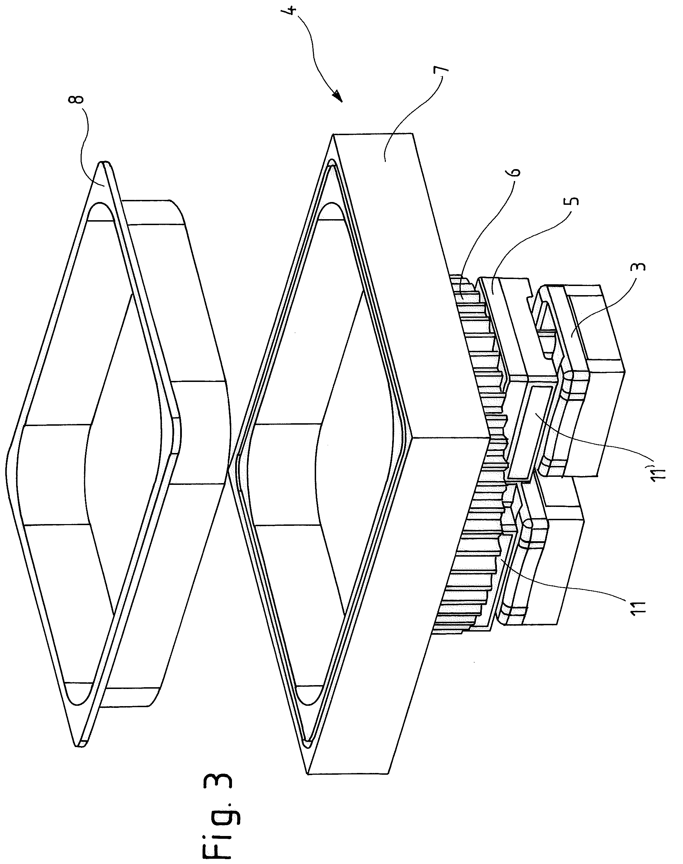

Eine Detailansicht der Lebensmittelzuführung 9 mit deren Lebensmittelübergabeende 10 ist in Figur 2 dargestellt. Das Lebensmittelübergabeende 10 stellt dabei den der Verpackungsaufnahme 4 nächstkommenden Bereich der Lebensmittelzuführung 9 dar, so dass eine geringe Fallhöhe der mittels Schwerkraft in bzw. auf einem Unterteil 8 einer Verpackung abzulegenden Lebensmittel gewährleistet ist. Die Verpackungsaufnahme 4 ist im Detail in Figur 3 dargestellt, wobei die Verpackungsaufnahme 4 mit an der Unterkonstruktion 5 ausgebildeten Befestigungsmitteln mit Montageplatten 11, 11' des zweiteiligen Wagens 3 verbunden ist. Auf der Unterkonstruktion 5 ist die Dreheinrichtung 6 befestigt, die einen gegenüber der Unterkonstruktion 5 drehbar gelagerten, außenseitigen Zahnkranz aufweist, der mittels der Führungsbahn 1 zugeordneten, statischen Antrieben zu dem Wagen 3 drehbar ist. Die Dreheinrichtung 6 ist zwischen der Unterkonstruktion 5 und dem Aufnahmerahmen 7 angeordnet. Der Aufnahmerahmen 7 ist in der dargestellten Ausführung als Aufnahmemulde ausgebildet, die in ihren Abmessungen einem Negativ des aufzunehmenden Unterteils 8 entspricht und diesen vollständig aufnehmen kann. Das eingesetzte Unterteil 8 und die Aufnahmemulde weisen dementsprechend je eine Öffnung in einer gleichen Ebene auf.

Um jetzt mehrere Lebensmittel in dem Unterteil 8 anzuordnen sind mehrere der in Figur 1 dargestellten Teile der Vorrichtung hintereinander anzuordnen, so dass der Wagen mit der Verpackung über die Führungsbahn 1 nacheinander den einzelnen Lebensmittelzuführungen 9 zugeführt wird und jeweils mit einem Lebensmittel beladen wird. Die Führungsbahn 1 ist dabei als Endlosbahn auszubilden, d.h. der jeweils erste Abschnitt 1a und der letzte Abschnitt 1c sind über einen weiteren Abschnitt der Führungsbahn 1 miteinander verbunden.

## Patentansprüche

1. Verfahren zum Anordnen mehrerer Lebensmittel, insbesondere verschiedener Sorten geschnittener Fleisch- und Wurstwaren, in wenigstens einem Unterteil (8) einer Verpackung, welches auf einem eine Verpackungsaufnahme (4) mit wenigstens einem Aufnahmerahmen (7) aufweisenden Wagen (3) auf einer Führungsbahn (1) verfahren wird, wobei der Wagen (3) mittels Magnetfeldquellen verfahren wird,
wobei der Wagen (3) nacheinander Lebensmittelzuführungen (9) der einzelnen Lebensmittel zugeführt wird, und
an jeder Lebensmittelzuführung (9) wenigstens ein Lebensmittel auf bzw. in dem Unterteil (8) abgelegt wird.

2. Verfahren nach Anspruch 1, **dadurch gekennzeichnet, dass** wenigstens eines der Lebensmittel in zumindest teilweise einander überlappenden Scheiben auf bzw. in dem Unterteil (8) abgelegt wird.

3. Verfahren nach Anspruch 1 oder 2, **dadurch gekennzeichnet, dass** die Unterteile (8) der Verpackungen an bzw. vor den einzelnen Lebensmittelzuführungen (9) gedreht werden.

4. Verfahren nach einem der Ansprüche 1 bis 3, **dadurch gekennzeichnet, dass** die Unterteile (8) an den Lebensmittelzuführungen (9) auf der Führungsbahn (1) angehalten werden, während diese befüllt werden.

5. Verfahren nach einem der Ansprüche 1 bis 4, **dadurch gekennzeichnet, dass** die Unterteile (8) nach dem Belegen von einem diese transportierenden, auf der Führungsbahn (1) verfahrbaren Wagen (3) weggedrückt und einem Verschließen der Verpackung zugeführt werden.

6. Vorrichtung zum Anordnen mehrerer Lebensmittel, insbesondere verschiedener Sorten geschnittener Fleisch- und Wurstwaren, in wenigstens einem Unterteil (8) einer Verpackung mit wenigstens zwei Lebensmittelzuführungen (9), welche mit jeweils einem Lebensmittelübergabeende (10) einer Führungsbahn (1) zugeordnet sind, auf der mittels Magnetfeldquellen Wagen (3) verfahrbar sind,
wobei die Lebensmittelzuführungen (9) zumindest mit den Lebensmittelübergabeenden (10) oberhalb der Führungsbahn (1) angeordnet sind, und
die Wagen (3) Verpackungsaufnahmen (4) mit wenigstens einem Aufnahmerahmen (7) aufweisen.

7. Vorrichtung nach Anspruch 6, **dadurch gekennzeichnet, dass** der Aufnahmerahmen (7) eine an das aufzunehmende Unterteil (8) angepasste Form aufweist.

8. Vorrichtung nach Anspruch 6 oder 7, **dadurch gekennzeichnet, dass** der Aufnahmerahmen (7) als Aufnahmemulde ausgebildet ist, wobei insbesondere die Aufnahmemulde eine Form aufweist, die einem Negativ der äußeren Abmessungen des aufzunehmenden Unterteils (8) entspricht.

9. Vorrichtung nach einem der Ansprüche 6 bis 8, **dadurch gekennzeichnet, dass** wenigstens einer der Lebensmittelzuführungen (9) ein Wagenhaltepunkt der Führungsbahn (1) zugeordnet ist.

10. Vorrichtung nach einem der Ansprüche 6 bis 9, **dadurch gekennzeichnet, dass** der Aufnahmerahmen (7) zu einer Unterkonstruktion (5) der Verpackungsaufnahme (4) drehbar ist.

11. Vorrichtung nach einem der Ansprüche 6 bis 10, **dadurch gekennzeichnet, dass** die Verpackungsaufnahme (4) eine Dreheinrichtung (6) mit einem Antrieb aufweist.

12. Vorrichtung nach einem der Ansprüche 6 bis 10, **dadurch gekennzeichnet, dass** die Verpackungsaufnahme (4) eine Dreheinrichtung (6) aufweist, die von außen über wenigstens einen der Führungsbahn (1) zugeordneten Antrieb betätigbar ist.

13. Vorrichtung nach Anspruch 12, **dadurch gekennzeichnet, dass** die der Führungsbahn (1) zugeordneten Antriebe in einer vorbestimmten Förderrichtung der Führungsbahn (1) vor oder unmittelbar an den jeweiligen Lebensmittelzuführungen (9) an der Führungsbahn (1) angeordnet sind.

14. Vorrichtung nach einem der Ansprüche 6 bis 13, **dadurch gekennzeichnet, dass** die Verpackungsaufnahmen (4) einen Auswurfmechanismus aufweisen, mit dem ein aufgenommenes Unterteil (8) aus dem Aufnahmerahmen (7) herausdrückbar ist.

## Claims

1. A method for arranging a plurality of foods, in particular different types of cut meat products and sausage products, in at least one base portion (8) of a packaging which is moved on a cart (3) on a guide track (1), said cart (3) having a packaging receiver (4) comprising at least one receiving frame (7), wherein the cart (3) is moved by means of magnetic field sources; wherein the cart (3) is fed successively to food feeds (9) of the individual foods; and
wherein at least one food is placed on or in the base portion (8) at each food feed (9).

2. A method in accordance with claim 1,
**characterized in that**
at least one of the foods is placed on or in the base portion (8) in at least partly mutually overlapping slices.

3. A method in accordance with claim 1 or claim 2,
**characterized in that**
the base portions (8) of the packagings are rotated at or in front of the individual food feeds (9).

4. A method in accordance with any one of the claims 1 to 3,
**characterized in that**
the base portions (8) are stopped at the food feeds (9) on the guide track (1) while they are being filled.

5. A method in accordance with any one of the claims 1 to 4,
**characterized in that**
the base portions (8) are pushed away from a cart (3) transporting them and movable on the guide track (1) after the filling and are fed to a closing of the packaging.

6. An apparatus for arranging a plurality of foods, in particular different types of cut meat products and sausage products, in at least one base portion (8) of a packaging comprising at least two food feeds (9), a respective food transfer end (10) of each of said food feeds (9) being associated with a guide track (1) on which carts (3) can be moved by means of magnetic field sources,
wherein at least the food transfer ends (10) of the food feeds (9) are arranged above the guide track (1); and
wherein the carts (3) have packaging receivers (4) comprising at least one receiving frame (7).

7. An apparatus in accordance with claim 6,
**characterized in that**
the receiving frame (7) has a shape adapted to the base portion (8) to be received.

8. An apparatus in accordance with claim 6 or claim 7,
**characterized in that**
the receiving frame (7) is configured as a receiving depression, with the receiving depression in particular having a shape which corresponds to a negative of the outer dimensions of the base portion (8) to be received.

9. An apparatus in accordance with any one of the claims 6 to 8, **characterized in that**
a cart holding point of the guide track (1) is associated with at least one of the food feeds (9).

10. An apparatus in accordance with any one of the claims 6 to 9, **characterized in that**
the receiving frame (7) is rotatable with respect to a lower construction (5) of the packaging receiver (4).

11. An apparatus in accordance with any one of the claims 6 to 10, **characterized in that**
the packaging receiver (4) has a rotation device (6) comprising a drive.

12. An apparatus in accordance with any one of the claims 6 to 10, **characterized in that**
the packaging receiver (4) has a rotation device (6) which can be actuated from the outside via at least one drive associated with the guide track (1).

13. An apparatus in accordance with claim 12,
**characterized in that**
the drives associated with the guide track (1) are arranged in front of or directly at the respective food feeds (9) at the guide track (1) in a predetermined conveying direction of the guide track (1).

14. An apparatus in accordance with any one of the claims 6 to 13, **characterized in that**
the packaging receivers (4) have an ejection mechanism with which a received base portion (8) can be pushed out of the receiving frame (7).

## Revendications

1. Procédé destiné à disposer plusieurs denrées alimentaires, en particulier différentes sortes de viandes et charcuteries tranchées, dans au moins une sous-partie (8) d'un emballage, qui est déplacée sur une glissière de guidage (1) sur un chariot (3) présentant une réception d'emballage (4) avec au moins un cadre de réception (7), le chariot (3) étant déplacé à l'aide de sources de champ magnétique,
dans lequel le chariot (3) est acheminé jusqu'à des acheminements de denrées alimentaires successifs (9) des denrées alimentaires individuelles, et au niveau de chaque acheminement de denrées alimentaires (9) au moins une denrée alimentaire est déposée sur respectivement dans la sous-partie (8).

2. Procédé selon la revendication 1, **caractérisé en ce qu'**au moins une des denrées alimentaires est déposée en tranches, qui se chevauchent au moins partiellement, sur respectivement dans la sous-partie (8).

3. Procédé selon la revendication 1 ou 2, **caractérisé en ce que** les sous-parties (8) des emballages sont tournées au niveau respectivement en amont des acheminements de denrées alimentaires individuels.

4. Procédé selon une des revendications 1 à 3, **caractérisé en ce que** les sous-parties (8) sont, pendant que celles-ci sont remplies, arrêtés sur la glissière de guidage (1) au niveau des acheminements de denrées alimentaires (9) sur la glissière de guidage (1).

5. Procédé selon une des revendications 1 à 4, **caractérisé en ce que** les sous-parties (8), après la depose, sont écartées d'un chariot (3) qui transporte celles-ci et qui peut se déplacer sur la glissière de guidage (1), et acheminées jusqu'à un scellement de l'emballage.

6. Dispositif destiné à disposer plusieurs denrées alimentaires, en particulier différentes sortes de viandes et charcuteries tranchées, dans au moins une sous-partie (8) d'un emballage, comportant au moins deux acheminements de denrées alimentaires (9), qui sont associés à une glissière de guidage (1) respectivement avec une extrémité de transfert de denrées alimentaires (10), sur laquelle glissière de guidage peuvent être déplacés des chariots (3) à l'aide de sources de champ magnétique,
dans lequel les acheminements de denrées alimentaires (9) sont disposés au moins avec les extrémités de transfert de denrées alimentaires (10) au-dessus de la glissière de guidage (1), et
les chariots (3) présentent des réceptions d'emballage (4) avec au moins un cadre de réception (7).

7. Dispositif selon la revendication 6, **caractérisé en ce que** le cadre de réception (7) présente une forme adaptée à la sous-partie (8) à recevoir.

8. Dispositif selon la revendication 6 ou 7, **caractérisé en ce que** le cadre de réception (7) est configuré sous la forme d'une auge de réception, dans lequel en particulier l'auge de réception présente une forme correspondant à un négatif des dimensions extérieures de la sous-partie (8) à recevoir.

9. Dispositif selon une des revendications 6 à 8, **caractérisé en ce qu'**un point d'arrêt de chariot de la glissière de guidage (1) est associé à au moins un des acheminements de denrées alimentaires (9).

10. Dispositif selon une des revendications 6 à 9, **caractérisé en ce que** le cadre de réception (7) est rotatif par rapport à une sous-construction (5) de la réception d'emballage (4).

11. Dispositif selon une des revendications 6 à 10, **caractérisé en ce que** la réception d'emballage(4) présente un moyen de rotation (6) avec un entraînement.

12. Dispositif selon une des revendications 6 à 10, **caractérisé en ce que** la réception d'emballage (4) présente un moyen de rotation (6) qui peut être actionné de l'extérieur par le bais d'au moins un entraînement associé à la glissière de guidage (1).

13. Dispositif selon la revendication 12, **caractérisé en ce que** les entraînements associés à la glissière de guidage (1) sont disposés au niveau de la glissière de guidage (1) dans une direction de transport prédéfinie de la glissière de guidage (1) en amont ou directement au niveau des acheminements de denrées alimentaires (9) respectifs.

14. Dispositif selon une des revendications 6 à 13, **caractérisé en ce que** les réceptions d'emballage (4) présentent un mécanisme d'éjection, qui permet de faire sortir du cadre de réception (7) une sous-partie reçue (8).
